# EUROPEAN PATENT SPECIFICATION

(11) **EP 2 646 755 B1**
(45) Date of publication and mention of the grant of the patent: **11.03.2015**
(21) Application number: 11794007.2
(22) Date of filing: 01.12.2011
(51) Int. Cl.: F24D 19/10

(54) **METHOD FOR OPERATING A HEATING SYSTEM**
VERFAHREN ZUR STEUERUNG EINES HEIZUNGSYSTEMS
PROCÉDÉ DE COMMANDE D'UN SYSTÈME DE CHAUFFAGE

(30) Priority: 03.12.2010 DE 102010053211
(43) Date of publication of application: 09.10.2013
(73) Proprietor: Danfoss A/S, 6430 Nordborg (DK)
(72) Inventor: GAMMELJORD, Peter, DK- 7100 Vejle (DK); SALTIN, Per, Johan, S-656 38 Karlstad (SE)
(74) Representative: Knoblauch, Andreas
(86) International application number: PCT/DK2011/000146
(87) International publication number: WO 2012/072079

(56) References cited:
- EP-A1- 0 060 801
- EP-A1- 1 300 634
- AT-B- 412 819
- US-A- 6 062 485

## Description

The invention relates to a method for operating a heating system, said heating system comprising a heat source in a room and at least a room heat exchanger which is connected to said heat source and controlled thermostatically by a control valve, said heat source outputting a heating fluid having a supply temperature, said supply temperature being controlled according to a heat curve, said heat curve showing a relation between said supply temperature and an outdoor temperature, wherein the method comprises the step of adjusting said heat curve and of determining the heat emitted in said room.

Such a method is known from US 6 062 485 A. This document shows the possibility to change the slope of the heat curve.

When a heating system of the kind described above is installed, the installer has to adjust the heat curve. The heat curve enables the system to react on different outdoor temperatures. When the outdoor temperature is low, the supply temperature supplied by the heat source is high and vice versa. In order to have a good efficiency, the adjustment of the heat curve should be made with a high accuracy by the installer. However, in most cases this is not done. The installer selects a heat curve which is set too high in order to avoid calls from unsatisfied customers. This leads to energy waste. When the heat curve is set too low, the customers are unsatisfied since they are not able to get the comfort temperature they want.

An accurate adjustment of the heat curve requires in most cases that the installer has to come to see the heating system a plurality of times so that he can consider different outdoor temperatures. This causes rather high costs of adjustment.

The task underlying the invention is to adjust the heat curve such that energy waste can be minimised while keeping the desired comfort temperature.

This task is solved with a method described above, in that the method further comprises the steps of comparing said emitted heat to a maximum level of heat emission, decreasing the slope of the heat curve, when the emitted heat is lower than a first predetermined fraction of the maximum level of heat emission, increasing the slope of the heat curve, when the emitted heat is above a second predetermined fraction of the maximum level of heat emission, and leaving the heat curve unchanged when the emitted heat is in a range between said first fraction and said second fraction of the maximum level of heat emission.

In this way it is possible to have the heat curve as close as possible to the actual demand of heat in said room. In an optimal case, the heat delivered or emitted to the room by said heat exchanger should be a predetermined fraction of the maximum level of heat emission. In this case it is possible to increase the emitted heat when the temperature is too low and to reduce the emitted heat when the temperature is too high. Since it is difficult to hit exactly the optimum point, a certain range around this point is allowable. However, if the heat emitted by the heat exchanger approaches the maximum possible level of heat emission of this heat exchanger, it is clear that the supply temperature of the heating fluid is not sufficient to reach the desired temperature in all cases. In this case the supply temperature should be increased, i.e. the heat curve should be made steeper. If the heat emitted by the heat exchanger is too small in relation to the maximum possible heat emission, this is an indication that the supply temperature of the heating fluid is too high and should be lowered, i.e. the slope of the heat curve should be made smaller. The maximum level of heat emission is reached when the control valve is continuously fully opened, so that practically all heat carried by the heating liquid is emitted into the room. This maximum level of heat emission therefore is dependent on the temperature of the heating fluid. The adjustment of the slope of the heat curve can be performed automatically.

In a preferred embodiment at least two heat exchangers are used, the most heat demanding heat exchanger is selected and this heat exchanger is used to determine the emitted heat. In most cases, the heating system supplies heat to more than one room and consequently, there is more than one heat exchanger. In this case the most heat demanding heat exchanger is selected as reference for adjusting the heat curve.

Preferably, the heat exchanger is operated in at least two different modes, each mode causing a predetermined temperature level, wherein the emitted heat is determined in the mode causing the highest temperature level. Most heating systems can be operated in a comfort mode in which the user gets a comfortable feeling in the room. This comfort mode usually has a temperature level of 20°C or more. This comfort mode is chosen when the user is at home and lives in the heated room. Another mode is an economy mode in which the temperature level is lowered by some degrees, e.g. to 15°C. The heat curve should be chosen so as to satisfy the demands during the comfort mode, i.e. the mode having the highest temperature level. The economy mode and transitions between the economy mode and the comfort mode can be disregarded for the adjustment of the heat curve.

Preferably, the control valve is controlled with pulse width modulation and the emitted heat is determined with help of a pulse duty factor. As mentioned above, the control valve is controlled thermostatically. In this case it is open for a fraction of a period this fraction being long enough to reach the desired temperature. In the remaining part of the period the control valve is closed stopping flow of heating fluid through the heat exchanger. The relation between the fraction of the period in which the control valve is open and the whole period is the pulse duty factor. This pulse duty factor can easily be used to determine the relation between the emitted heat and the maximum level of heat emission. When for example the duty cycle factor is 85%, this means that heat of a certain percentage of the maximum level of heat emission is emitted to the room. This percentage is not necessarily the duty cycle factor, although it could be. In any case the duty cycle factor can be used as a criterion.

Furthermore, it is preferred that an average of the emitted heat over a predetermined time period is calculated and said average is used for adjusting the heat curve. As an alternative of calculating an average, the emitted heat can be filtered in a first order filter with a time constant corresponding to the predetermined time period which can be e.g. 2, 3, or 4 hours. This compensates for short time factors like open doors, open windows, persons in the room, sun radiation and the like unless these are long lasting conditions.

Preferably a hinge point of the heat curve is defined at a point of no heat demand. When the heat curve is adjusted, it is rotated around this hinge point. The hinge point is selected for example at a point where a comfort temperature is reached without any heat emission. If e.g. 20°C is needed in the room and the outdoor temperature is 20°C, a heat demand is Zero. Such point can be used as hinge point.

Preferably the heat curve is used with the same form for all adjustments and the adjustment is made by raising or lowering a point of the heat curve at a predetermined outdoor temperature by a predetermined amount of degrees. For example an outdoor temperature of 0°C can be used and the point of the heat curve corresponding to this outdoor temperature is lowered or raised by 1°C. Since the form or shape of the heat curve is kept the same for all adjustments it is sufficient to just change the supply temperature of the heating fluid at one point corresponding to one specific outdoor temperature.

In this case it is preferred that the heat curve has the form of a straight line. This straight line is defined by two points. In the present case this is the hinge point and the adjustment point for example at 0°C outdoor temperature.

Furthermore, it is preferred that the adjustment is made below a predetermined outdoor temperature only. When the outdoor temperature is too high, the condition is close to the hinge point, and adjustments will have a high effect on the curve having the risk of making the system instable. For example an adjustment is avoided when the outdoor temperature is above 8°C or 10°C.

Preferably a heat pump is used as said heat source. A heat pump has the desired characteristic, i.e. the function between the outdoor temperature and the supply temperature of the heating fluid can easily be made as a straight line.

A preferred example of the invention will now be described in more detail with reference to the drawing, wherein
- Fig. 1: is a schematic illustration of a heating system and
- Fig. 2: is an illustration of a heat curve.

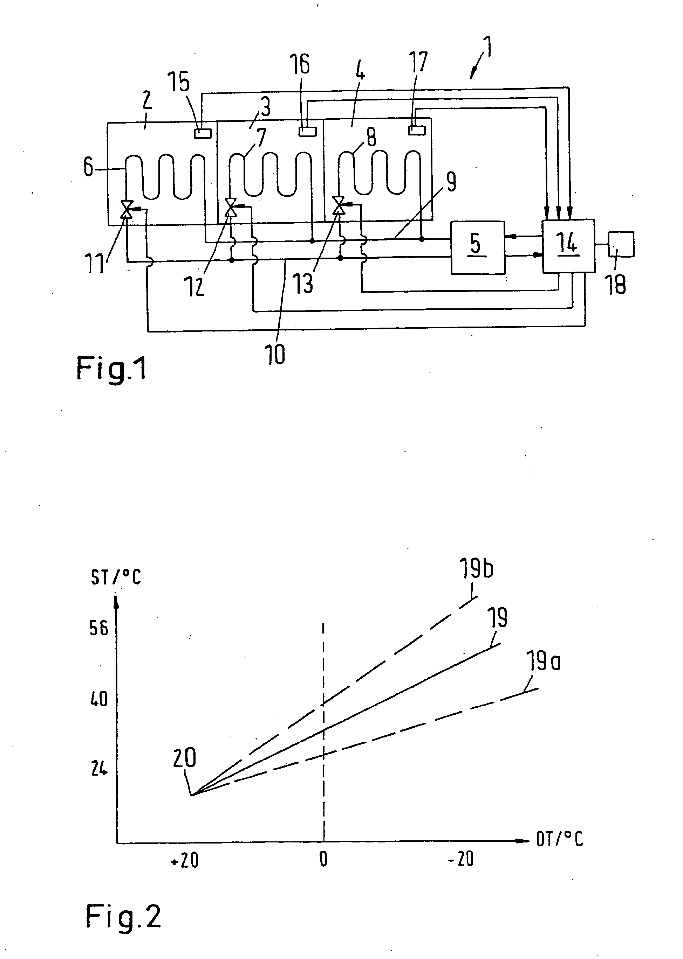

Fig. 1 schematically shows a heating system 1 for heating a plurality of rooms 2, 3, 4. The system 1 comprises a heat source in the form of a heat pump 5. Other heat sources can be used as well. The heat pump 5 is connected to heat exchangers 6, 7, 8. Each heat exchanger 6, 7, 8 is positioned in one of the rooms 2, 3, 4. In the present heating system 1 the heat exchangers 6, 7, 8 have the form of floor heating lines. It is possible to use other heat exchangers, e.g. radiators. The heat exchangers 6, 7, 8 are connected to the heat pump 5 via a supply line 9 and a return line 10.

The heat pump 5 heats a heating fluid. The flow of this heating fluid through the heat exchangers 6, 7, 8 is controlled by control valves 11, 12,13. The control valves 11, 12, 13 are controlled by a control means 14. The connection between the control means 14 and the control valves 11, 12, 13 can have the form of a signal transmitting line or can be made wireless.

Each room 2, 3, 4 is provided with a temperature sensor 15, 16, 17. The temperature sensors 15, 16, 17 are connected with the control means 14 and deliver information about the actual temperature of each room 2, 3, 4. Such a connection can be made by means of a signal transmitting line or wireless.

The control means 14 compares the temperature detected by the temperature sensor 15, 16, 17 with a desired temperature in each room 2, 3, 4 and controls the control valves 11, 12, 13 in such a manner that the desired temperature is reached. Therefore, the control valves 11, 12, 13 are operated thermostatically.

The control valves 11, 12, 13 are on/off valves, which are operated with pulse width modulation. In other words, during a time period of a predetermined length each control valve 11, 12, 13 is opened over a part of this period. The length of the time period is chosen by the control means 14 so that the desired temperature is reached. The opening degree of each control valve 11, 12, 13, which can be expressed by a duty cycle factor, is a factor which can be used to determine the amount of heat emitted to each room 2, 3, 4.

The system can be operated in a comfort mode in which some or all rooms 2, 3, 4 are heated to a comfort temperature, e.g. 20°C or more giving a user a comfortable feeling. The comfort mode is the mode of operation having the highest temperature level. Furthermore, the system 1 can be operated in an economic mode in which the temperature level is lowered. The economic mode is used when a user is expected to be absent. In this case the temperature level can be approximately 15°C or less.

Both modes can be pre-selected by a program or the like.

The control means 14 is connected to an outdoor temperature sensor 18. This outdoor temperature sensor 18 could also be connected to the heat pump 5. It detects the outdoor temperature.

The temperature of the heating fluid in the supply line 9 depends on the outdoor temperature. This relation is schematically illustrated by a heat curve 19 shown in Fig. 2. In Fig. 2 the outdoor temperature OT in °C is shown on the horizontal axis and the supply temperature ST in °C of the heating fluid in supply line 9 is shown in the vertical axis.

The heat curve 19 is a straight line having a hinge point 20. The hinge point 20 is chosen as a point in which there is no heat demand in a room having the highest temperature in the comfort mode of operation. The hinge point 20 is selected at said room temperature on the horizontal axis and said room temperature on the vertical axis. The reason for that is: If e.g. 20°C is needed in the room and the outdoor temperature is 20°C, the heat demand is Zero.

The heat curve 19 shows that for a lower outdoor temperature OT a higher supply temperature ST is produced by the heat pump 5.

The heat curve 19 shown with full lines in Fig. 2 may be the right one or may not be the right one. If for example the heat curve 19 is set too high, energy is wasted since the supply temperature of the heating fluid is too high for the actual demand. If on the other hand the heat curve 19 is set to low, the customers are unsatisfied since they are not able to get the comfort temperature they want to get.

In order to find the right heat curve 19 an optimisation is performed which manipulates the heat curve 19 in the following way: The heat emitted in said room is determined. This determination can easily be made by detecting the duty cycle factor of each control valve 11, 12, 13. During a period, the percentage of the period in which said control valves 11, 12, 13 are open, is determined. In this case it is assumed that a maximum level of heat emission is reached when the control valve 11, 12, 13 is open over 100% or the whole period. It is not possible to emit more heat.

If the emitted heat is lower than a first predetermined fraction of the maximum level of heat emission (in other words: the control valve is open for a short time only, the duty cycle factor being too small), the slope of the heat curve 19 is decreased to obtain a heat curve 19a. If on the other hand the emitted heat is above a second predetermined fraction of the maximum level of heat emission (in other words: the control valve is open too long, the duty cycle factor being too large), the slope of the heat curve 19 is increased to get a heat curve 19b. Only in cases when the emitted heat is in a range between said first fraction and said second fraction of the maximum level of heat emission, the heat curve is left as it is.

When there is more than one room 2, 3, 4, the room having the highest heat demand is selected as criterion.

To give an example: If the emitted heat in the most heat demanding room is between 85% and 95% of the maximum level of heat emission, the heat curve 19 is fine and will not be adjusted. If the emitted heat in the most demanding room is above 95% of the maximum level of heat emission, the heat curve 19 should be increased, i.e. the slope is increased to get the heat curve 19b. If the emitted heat in the most demanding room is below 85% of the maximum level of heat emission, the slope of the heat curve 19 is decreased to get the heat curve 19a. Other percentages can be chosen depending on specific conditions of the heating system, the rooms and the environment.

As mentioned above, the heat curve 19 is a straight line, which can be defined by two points. One of the two points is the hinge point 20. The other point can for example be selected at an outdoor temperature OT of 0°C. Starting from an existing heat curve 19, the supply temperature ST at 0°C is increased by 1°C when the slope of the heat curve 19 is to be increased or it is decreased by 1 °C when the slope of the heat curve 19 is to be decreased.

The slope of the initial heat curve 19 should be large enough to ensure proper comfort for the end user. However, the initial start-up value could be based on knowledge of the heating system. For example, radiators require higher supply temperatures than floor heating heat exchangers.

In order to avoid compensations for factors like wind chill, wind direction, sun radiation or the like, the emitted heat is filtered in a first order filter with a time constant of some hours. Alternatively, an average of the emitted heat over these hours is calculated.

The heat curve 19 is not adjusted when the outdoor temperature is too high, e.g. 8°C or 10°C.

The method described combines three controls. The temperature in a room is controlled thermostatically. The supply temperature is controlled according to the heat curve and the slope of the heat curve is controlled depending on the heat demand of at least one room.

## Claims

1. A method for operating a heating system (1), said heating system (1) comprising a heat source (5) and in at least one room (2-4) at least a room heat exchanger (6-8) which is connected to said heat source (5) and controlled thermostatically by a control valve (11-13), said heat source (5) outputting a heating fluid having a supply temperature (ST), said supply temperature (ST) being controlled according to a heat curve (19), said heat curve (19) showing a relation between said supply temperature (ST) and an outdoor temperature (OT),
wherein the method comprises the step of adjusting said heat curve (19) and of determining the heat emitted in said room (2-4), **characterized in that** the method comprises further the steps of comparing said emitted heat to a maximum level of heat emission, decreasing the slope of the heat curve (19), when the emitted heat is lower than a first predetermined fraction of the maximum level of heat emission, increasing the slope of the heat curve, when the emitted heat is above a second predetermined fraction of the maximum level of heat emission, and leaving the heat curve when the emitted heat is in a range between said first fraction and said second fraction of the maximum level of heat emission.

2. The method according to claim 1, **characterized in that** at least two heat exchangers (6-8) are used, the most heat demanding heat exchanger is selected and this heat exchanger is used to determine the emitted heat.

3. The method according to claim 1 or 2, **characterized in that** the heat exchanger (6-8) is operated in at least two different modes, each mode causing a predetermined temperature level, wherein the emitted heat is determined in the mode causing the highest temperature level.

4. The method according to any of claims 1 to 3, **characterized in that** the control valve (11-13) is controlled with pulse width modulation and the emitted heat is determined with help of a pulse duty factor.

5. The method according to any of claims 1 to 4, **characterized in that** an average of the emitted heat over a predetermined time period is calculated and that said average is used for adjusting the heat curve (19)

6. The method according to any of claims 1 to 5, **characterized in that** a hinge point (20) of the heat curve (19) is defined at a point of no heat demand.

7. The method according to any of claims 1 to 6, **characterized in that** the heat curve (19) is used with the same form for all adjustments and the adjustment is made by raising or lowering a point of the heat curve (19) at a predetermined outdoor temperature by a predetermined amount of degrees.

8. The method according to claim 7, **characterized in that** the heat curve (19) has the form of a straight line.

9. The method according to any of claims 1 to 8, **characterized in that** the adjustment is made below a predetermined outdoor temperature (OT) only.

10. Th e method according to any of claims 1 to 9, **characterized in that** a heat pump is used as said heat source (5).

## Patentansprüche

1. Verfahren zum Betreiben eines Heizsystems (1), wobei das Heizsystem (1) eine Wärmequelle (5) und in wenigstens einem Raum (2-4) wenigstens einen Raumwärmetauscher (6-8), der mit der Wärmequelle (5) verbunden ist, und durch ein Steuerventil (11-13) thermostatisch gesteuert wird, umfasst, wobei die Wärmequelle (5) ein Heizfluid mit einer Vorlauftemperatur (ST) ausgibt, wobei die Vorlauftemperatur (ST) in Übereinstimmung mit einer Heizkurve (19) gesteuert wird, wobei die Heizkurve (19) eine Beziehung zwischen der Vorlauftemperatur (ST) und einer Außentemperatur (OT) angibt, wobei das Verfahren den Schritt des Einstellens der Heizkurve (19) und des Bestimmens der in dem Raum (2-4) abgestrahlten Wärme umfasst, **dadurch gekennzeichnet, dass** das Verfahren die weiteren Schritte des Vergleichens der abgestrahlten Wärme mit einem maximalen Wärmeabstrahlungspegel, des Absenkens der Steigung der Heizkurve (19), wenn die abgestrahlte Wärme weniger als ein erster vorgegebener Anteil des maximalen Wärmeabstrahlungspegels ist, des Anhebens der Steigung der Heizkurve, wenn die abgestrahlte Wärme über einem zweiten vorgegebenen Anteil des maximalen Wärmeabstrahlungspegels liegt, und des Belassens der Heizkurve, wenn die abgestrahlte Wärme in einem Bereich zwischen dem ersten Anteil und dem zweiten Anteil des maximalen Wärmeabstrahlungspegels liegt, umfasst.

2. Verfahren nach Anspruch 1, **dadurch gekennzeichnet, dass** wenigstens zwei Wärmetauscher (6-8) verwendet werden, wobei der Wärmetauscher mit der größten Wärmeanforderung gewählt wird und dieser Wärmetauscher verwendet wird, um die abgestrahlte Wärme zu bestimmen.

3. Verfahren nach Anspruch 1 oder 2, **dadurch gekennzeichnet, dass** der Wärmetauscher (6-8) in wenigstens zwei verschiedenen Betriebsarten betrieben wird, wobei jede Betriebsart ein vorgegebenes Temperaturniveau bewirkt, wobei die abgestrahlte Wärme in der Betriebsart, die das höchste Temperaturniveau bewirkt, bestimmt wird.

4. Verfahren nach einem der Ansprüche 1 bis 3, **dadurch gekennzeichnet, dass** das Steuerventil (11-13) mit Impulsbreitenmodulation gesteuert wird und die abgestrahlte Wärme mit Hilfe eines Impulstastgrades bestimmt wird.

5. Verfahren nach einem der Ansprüche 1 bis 4, **dadurch gekennzeichnet, dass** ein Mittelwert der abgestrahlten Wärme über eine vorgegebene Zeitdauer berechnet wird und der Mittelwert zum Einstellen der Heizkurve (19) verwendet wird.

6. Verfahren nach einem der Ansprüche 1 bis 5, **dadurch gekennzeichnet, dass** ein Drehpunkt (20) der Heizkurve (19) an einem Punkt ohne Wärmeanforderung definiert ist.

7. Verfahren nach einem der Ansprüche 1 bis 6, **dadurch gekennzeichnet, dass** die Heizkurve (19) mit derselben Form für alle Einstellungen verwendet wird und die Einstellung durch Anheben oder Absenken eines Punkts der Heizkurve (19) bei einer vorgegebenen Außentemperatur um einen vorgegebenen Gradbetrag vorgenommen wird.

8. Verfahren nach Anspruch 7, **dadurch gekennzeichnet, dass** die Heizkurve (19) die Form einer geraden Linie hat.

9. Verfahren nach einem der Ansprüche 1 bis 8, **dadurch gekennzeichnet, dass** die Einstellung nur unterhalb einer vorgegebenen Außentemperatur (OT) vorgenommen wird.

10. Verfahren nach einem der Ansprüche 1 bis 9, **dadurch gekennzeichnet, dass** als Wärmequelle (5) eine Wärmepumpe verwendet wird.

## Revendications

1. Procédé d'exploitation d'un système (1) de chauffage, ledit système (1) de chauffage comportant une source (5) de chaleur et, dans au moins une pièce (2-4), au moins un échangeur (6-8) de chaleur de pièce qui est relié à ladite source (5) de chaleur et qui fait l'objet d'une régulation thermostatique par une soupape régulatrice (11-13), ladite source (5) de chaleur délivrant un fluide de chauffage présentant une température d'alimentation (ST), ladite température d'alimentation (ST) étant régulée en fonction d'une courbe (19) de chaleur, ladite courbe (19) de chaleur montrant une relation entre ladite température d'alimentation (ST) et une température d'extérieur (OT), le procédé comportant l'étape consistant à régler ladite courbe (19) de chaleur et à déterminer la chaleur émise dans ladite pièce (2-4), **caractérisé en ce que** le procédé comporte en outre les étapes consistant à comparer ladite chaleur émise à un niveau maximal d'émission de chaleur, en diminuant la pente de la courbe (19) de chaleur lorsque la chaleur émise est inférieure à une première fraction prédéterminée du niveau maximal d'émission de chaleur, en augmentant la pente de la courbe de chaleur lorsque la chaleur émise est supérieure à une deuxième fraction prédéterminée du niveau maximal d'émission de chaleur, et en laissant la courbe de chaleur lorsque la chaleur émise se situe dans une plage comprise entre ladite première fraction et ladite deuxième fraction du niveau maximal d'émission de chaleur.

2. Procédé selon la revendication 1, **caractérisé en ce qu'**au moins deux échangeurs (6-8) de chaleur sont utilisés, **en ce que** l'échangeur de chaleur exigeant le plus de chaleur est sélectionné et **en ce que** cet échangeur de chaleur est utilisé pour déterminer la chaleur émise.

3. Procédé selon la revendication 1 ou 2, **caractérisé en ce que** l'échangeur (6-8) de chaleur est exploité dans au moins deux modes différents, chaque mode entraînant un niveau de température prédéterminé, la chaleur émise étant déterminée dans le mode entraînant le niveau de température plus élevé.

4. Procédé selon l'une quelconque des revendications 1 à 3, **caractérisé en ce que** la soupape régulatrice (11-13) est régulé par modulation de largeur d'impulsions et **en ce que** la chaleur émise est déterminée à l'aide d'un facteur de durée d'impulsions.

5. Procédé selon l'une quelconque des revendications 1 à 4, **caractérisé en ce qu'**une moyenne de la chaleur émise sur un laps de temps prédéterminé est calculé et **en ce que** ladite moyenne est utilisée pour régler la courbe (19) de chaleur.

6. Procédé selon l'une quelconque des revendications 1 à 5, **caractérisé en ce qu'**un point (20) de pivot de la courbe (19) de chaleur est défini en un point de demande de chaleur nulle.

7. Procédé selon l'une quelconque des revendications 1 à 6, **caractérisé en ce que** la courbe (19) de chaleur est utilisée avec la même forme pour tous les réglages et **en ce que** le réglage est effectué en relevant ou en abaissant un point de la courbe (19) de chaleur à une température d'extérieur prédéterminée d'un nombre prédéterminé de degrés.

8. Procédé selon la revendication 7, **caractérisé en ce que** la courbe (19) de chaleur présente la forme d'une ligne droite.

9. Procédé selon l'une quelconque des revendications 1 à 8, **caractérisé en ce que** le réglage est effectué uniquement au-dessous d'une température d'extérieur (OT) prédéterminée.

10. Procédé selon l'une quelconque des revendications 1 à 9, **caractérisé en ce qu'**une pompe à chaleur est utilisée comme ladite source (5) de chaleur.
